# EUROPÄISCHE PATENTSCHRIFT

(11) **EP 2 576 870 B1**
(45) Veröffentlichungstag und Bekanntmachung des Hinweises auf die Patenterteilung: **14.11.2018**
(21) Anmeldenummer: 11727660.0
(22) Anmeldetag: 31.05.2011
(51) Int. Cl.: C25C 3/08, C25C 7/02, C04B 35/52

(54) **KOHLENSTOFFKÖRPER, VERFAHREN ZUR HERSTELLUNG EINES KOHLENSTOFFKÖRPERS UND SEINE VERWENDUNG**
CARBON BODY, METHOD FOR PRODUCING A CARBON BODY AND USE THEREOF
CORPS EN CARBONE, PROCÉDÉ DE FABRICATION D'UN CORPS EN CARBONE ET UTILISATION DUDIT CORPS EN CARBONE

(30) Priorität: 31.05.2010 DE 102010029538
(43) Veröffentlichungstag der Anmeldung: 10.04.2013
(73) Patentinhaber: SGL CFL CE GmbH, 86405 Meitingen (DE)
(72) Erfinder: FROHS, Wilhelm, 86695 Allmannshofen (DE); HILTMANN, Frank, 65830 Kriftel (DE); TOMALA, Janusz, PL-47-400 Racibórz (PL)
(86) Internationale Anmeldenummer: PCT/EP2011/058887
(87) Internationale Veröffentlichungsnummer: WO 2011/151302

(56) Entgegenhaltungen:
- EP-A1- 1 959 462
- DE-C1- 10 164 013
- FR-A1- 2 821 365
- US-A- 5 688 155
- US-B1- 6 231 745

## Beschreibung

Die vorliegende Erfindung betrifft einen Kohlenstoffkörper, ein Verfahren zur Herstellung eines Kohlenstoffkörpers sowie seine Verwendung.

Kohlenstoffkörper werden als Bauteile in der chemischen Industrie verwendet, die oftmals aggressiven Chemikalien und hohen Temperaturen ausgesetzt werden. Die Anforderungen an diese Bauteile sind hoch, und die Lebensdauer ist begrenzt.

Kathoden aus nicht graphitischem Kohlenstoff und Graphit werden beispielsweise als Bodenauskleidung von Aluminiumelektrolysezellen eingesetzt. Diese Materialien verbinden eine sehr gute elektrische Leitfähigkeit mit einer hohen Temperaturbeständigkeit und chemischen Widerstandsfähigkeit. Besonders graphitierte Kathoden sind aufgrund ihrer exzellenten elektrischen Leitfähigkeit für moderne Zellen hoher Stromstärke geeignet. Allerdings zeigen diese eine stärkere Abnutzung während des Betriebes als beispielsweise Kathoden auf Anthrazitbasis. Der Abtrag konzentriert sich an den Enden der Kathoden, wo eine hohe Stromdichte vorherrscht, sodass es zur Ausbildung eines W-förmigen Profils kommt. Mechanische Einflüsse spielen eine nicht unerhebliche Rolle, da sich die schmelzflüssige Aluminiumschicht auf der Kathodenblock-Oberfläche aufgrund der hohen Magnetfelder ständig in Bewegung befindet. Daneben kommt es zu chemischen Angriffen durch die Komponenten des Elektrolysebades. Beide Arten der Erosion limitieren die Lebensdauer der Kathodenblöcke und damit der Elektrolysezelle.

Eine Kathode, bei der dieses Problem vermieden werden soll, ist in der FR 2821365 beschrieben. Die Kathode weist ein Kohlenstoffprodukt auf, das auch nach einer Behandlung bei einer Temperatur oberhalb von 2400°C gegenüber Natrium reaktiv ist. Das Natrium stammt aus dem Kryolith welches typischerweise dem Elektrolysebad zugesetzt wird.

Hochofensteine sind ebenfalls aus nicht-graphitischem Kohlenstoff oder Graphit gefertigt. Ein technisches Problem bei Hochöfen zur Herstellung von Eisen ist die Erosion von Hochofensteinen bevorzugt im Abstichbereich des Hochofens. Insbesondere hier greift das flüssige Roheisen chemisch und mechanisch die Graphit- und Kohlenstoffauskleidung übermäßig an.

Es besteht somit das Problem, dass der Kohlenstoffkörper durch chemische und mechanische Erosion angegriffen wird und daher die Lebensdauer verkürzt ist. Aufgabe der vorliegenden Erfindung ist daher, einen Kohlenstoffkörper zur Verfügung zu stellen, der eine hohe Lebensdauer aufweist.

Erfindungsgemäß wird die Aufgabe durch einen Kohlenstoffkörper gemäß Anspruch 1 sowie durch ein Verfahren gemäß Anspruch 7 gelöst. Erfindungsgemäß wird ein Kohlenstoffkörper, der durch Brennen einer Mischung, die zumindest Koks enthält, hergestellt ist, zur Verfügung gestellt, wobei der Koks ein Koks niedriger Graphitierbarkeit ist.

Ein Koks mit einer niedrigen Graphitierbarkeit weist eine hohe Härte und Abriebfestigkeit auch nach Aussetzung zu einer hohen Temperatur im Herstellungsprozess, wie beispielsweise bis zu 3000°C auf. Durch den Zusatz von Koks mit einer niedrigen Graphitierbarkeit wird im Vergleich zu herkömmlichen Kohlenstoffkörpern ohne erfindungsgemäßen Zusatz des schlecht graphitierbaren Kokses die Abriebfestigkeit der Oberfläche des Kohlenstoffkörpers erhöht. Der Koks mit einer niedrigen Graphitierbarkeit wirkt insbesondere als Mittel zur Erzeugung einer hohen Abriebfestigkeit.

Bevorzugt bewirkt der Koks einer geringen Graphitierbarkeit eine höhere Rohdichte des Kohlenstoffkörpers im Vergleich zu herkömmlichen Kohlenstoffkörpern.

Der Koks ist ein Koks mit einer sphärischen Morphologie. Durch seine annähernd kugelförmige Geometrie erhöht der Koks die Fließfähigkeit der Masse bei der Formgebung des Kohlenstoffkörpers. Der Kohlenstoffkörper weist dadurch vorteilhafterweise eine höhere Rohdichte auf als herkömmliche Kohlenstoffkörper. Der Kohlenstoffkörper weist dadurch weiterhin bevorzugt eine hohe Verschleißfestigkeit auf.

Neben dem Koks, der gemäß der Erfindung eine geringe Graphitierbarkeit aufweist, ist der Kohlenstoffkörper bevorzugt mit Anthrazit, Graphit und/oder herkömmlichen Koks wie beispielsweise Petrol- oder Steinkohlenteerpechkoks, mindestens einem Bindemittel wie beispielsweise aus der Gruppe der erdöl- oder kohlebasierenden Bindemittel wie Teer, Petroleumpech, Steinkohlenteerpech, Bitumen oder ein Phenol- oder Furanharz und optional Additiven wie beispielsweise Kohlenstoff-Fasern hergestellt. Die vorstehenden Ausgangsmaterialien können verschiedene Korngrößen aufweisen. Rezepturen aus den vorstehend genannten Ausgangsmaterialien für herkömmliche Kohlenstoffkörper wie beispielsweise einen Kathodenblock oder einen Hochofenstein sind bekannt. Bei Kohlenstoffkörpern, die herkömmlich Petrol- und/oder Steinkohlenteerpechkoks enthalten, ist vorzugsweise zumindest teilweise der Petrol- und/oder Steinkohlenteerpechkoks durch den Koks einer geringen Graphitierbarkeit ersetzt.

Erfindungsgemäß beträgt der Graphitierungsgrad nach Maire und Mehring nach einer Temperaturbehandlung des schlecht graphitierbaren Kokses bei 2800°C, berechnet aus dem mittleren Schichtebenenabstand c/2, maximal 0,5 oder weniger. Während der Graphitierung des Kohlenstoffkörpers bei einer Temperatur bis zu 3000°C bildet der Koks keine oder nur eine sehr geringe Graphitstruktur aus und behält dadurch seine Abriebfestigkeit sowie seine hohe Härte.

Erfindungsgemäß ist die Körnung des Kokses mit niedriger Graphitierbarkeit größer als 0,5 mm. Wenn der Kohlenstoffkörper eine vorbestimmte Leitfähigkeit aufweisen soll, ist der Koks mit niedriger Graphitierbarkeit in einer Menge von höchstens 25 Gew.-%, bezogen auf die Trockenmischung, in dem Kohlenstoffkörper enthalten. Bevorzugter ist der Koks in einer Menge von 10 bis 20 Gew.-%, bezogen auf die Trockenmischung, in dem Kohlenstoffkörper enthalten.

Der Koks mit niedriger Graphitierbarkeit stellt aufgrund seiner sphärischen Morphologie ein Formgebungshilfsmittel dar, mit dem eine höhere Rohdichte des Kohlenstoffkörpers im Vergleich zu einem herkömmlichen Kohlenstoffkörper erzielt werden kann. Er weist in einer bevorzugten Ausführungsform eine kugelförmige bis leicht ellipsoidförmige Gestalt auf. Weiterhin weist er bevorzugt eine Zwiebelschalenstruktur auf, welche im Einklang mit seiner niedrigen Graphitierbarkeit steht. Im Sinne der vorliegenden Erfindung wird mit dem Ausdruck "Zwiebelschalenstruktur" ein mehrschichtiger Aufbau bezeichnet, der eine Innenschicht von kugel- bis ellipsoidförmiger Gestalt umfasst, die vollständig oder teilweise von mindestens einer Zwischenschicht und einer Außenschicht bedeckt ist. Besonders bevorzugt stellt das Mittel zur Erzeugung einer hohen Rohdichte und einer hohen Abriebfestigkeit einen Koks mit einer niedrigen Graphitierbarkeit, einer hohen Härte und einer sphärischen, zwiebelschalenartig aufgebauten Struktur dar.

Der Koks mit einer kugel- bis ellipsoidförmigen Gestalt weist bevorzugt ein Länge-/Durchmesser-Verhältnis von 1 bis 10, bevorzugter von 1 bis 5, bevorzugter von 1 bis 3, auf. Je mehr sich die Gestalt des Kokses an eine kugelförmige Struktur annähert, desto besser sind die Fließfähigkeit der Masse und die mechanischen Eigenschaften des Kohlenstoffkörpers.

Besonders bevorzugt ist der erfindungsgemäß verwendete Koks schwer bis nicht graphitierbar, hochisotrop, hart und wenig porös und weist eine niedrige spezifische Oberfläche beispielsweise in dem Bereich von 10 bis 40 m²/g, bevorzugter, 20 bis 30 m²/g, auf. Der durch Röntgenbeugung ermittelbare mittlere Schichtabstand d₀₀₂ des Kokses beträgt bevorzugt 0,340 bis 0,344 nm (dies entspricht einem Graphitierungsgrad von 0,0 bis 0,5 nach Maire und Mehring), ist jedoch nicht kleiner als 0,339 nm nach einer Temperaturbehandlung bei 2800°C. Die scheinbare Stapelhöhe L_{c} liegt bevorzugt unterhalb von 20 nm nach einer Temperaturbehandlung bei 2800°C.

Ein spezieller Vertreter dieses Kokses mit einer geringen Graphitierbarkeit ist ein Koks, der als Nebenprodukt bei der Herstellung von ungesättigten Kohlenwasserstoffen insbesondere Acetylen anfällt. Der erfindungsgemäß eingesetzte Koks mit einer geringen Graphitierbarkeit ist insbesondere aus Rohölfraktionen oder Steamcrackerrückständen erhältlich, welche beim Quenchen von Reaktionsgas in der Synthese von ungesättigten Kohlenwasserstoffen (Acetylen) verwendet werden, wobei das Quenchöl/Russgemisch zu einem Koker abgeführt wird, der auf etwa 500°C erhitzt wird. Flüchtige Bestandteile des Quenchöls verdampfen in dem Koker, von dessen Boden der Koks entnommen werden kann. Auf diese Weise wird ein feinkörniger zwiebelschalenartiger Koks gewonnen, der neben den vorstehend beschriebenen Eigenschaften hochrein ist und wenig bis keine Asche- und Mineralstoffgehalte aufweist. Der Koks weist bevorzugt einen Kohlenstoffgehalt von mindestens 96 Gew.-% und einen Aschegehalt von höchsten 0,05 Gew.-%, bevorzugt höchstens 0,01 Gew.-%, auf.

Ein Verfahren zur Herstellung von Acetylen, bei dem ein derartiger Koks als Nebenprodukt anfällt, ist beispielsweise in der DE 29 47 005 A1 beschrieben. Dabei wird aus dem Quenchöl der vorstehend charakterisierte Koks mit einer geringen Graphitierbarkeit hergestellt. Erfindungsgemäß ist bei einer herkömmlichen Zusammensetzung des Kohlenstoffkörpers, der Petrolkoks aufweist, insbesondere der Petrolkoks zumindest teilweise durch den Koks mit einer geringen Graphitierbarkeit ersetzt, um den erfindungsgemäßen Kohlenstoffkörper auszubilden.

Vorzugsweise ist der Koks mit einer geringen Graphitierbarkeit hochrein und weist wenig bis keine Asche- und Mineralstoffgehalte auf. Der Koks mit einer geringen Graphitierbarkeit kann aber auch hohe Asche- und Mineralstoffgehalte aufweisen und weniger rein sein. Die Reinheit des Kokses ist von der Reinheit des verwendeten Quenchöls abhängig. Üblicherweise ist Koks ein Feststoff mit hohem Kohlenstoffgehalt und im nicht graphitischen Zustand und wird durch Pyrolyse von organischem Material hergestellt, welches zumindest teilweise während des Carbonisierprozesses einen flüssigen oder flüssigkristallinen Zustand durchlaufen hat. Vermutlich behindern die Russpartikel die Ausbildung einer ungestörten Flüssigphase (Mesophase) und liefern einen Koks hoher Härte und schlechter Graphitierbarkeit. Aus dem Gasquenchverfahren erhaltener Koks ist daher durch Wärmebehandlung bei Temperaturen oberhalb von 2200°C nur wenig graphitierbar. Nach einer Wärmebehandlung bei 2800°C beträgt der aus dem Röntgenbeugungsinterferenz d₀₀₂ ermittelte mittlere Schichtabstand c/2 0,34 nm oder mehr und die Kristallitgröße in die c-Richtung L_{c} weniger als 20 nm und die Kristallitgröße La₁₁₀ weniger als 50 nm, bevorzugt weniger als 40 nm. Besonders bevorzugt weist der erfindungsgemäß eingesetzte Koks eine hohe Härte und eine schlechte Graphitierbarkeit auf und der mittlere Schichtabstand c/2 nach 2800°C Temperaturbehandlung ist größer oder gleich 0,34 nm.

In der Regel fällt der derart hergestellte Koks in kugelförmigen Partikeln von wenigen Mikrometern bis einigen Millimetern an. Der erfindungsgemäß verwendete Koks mit einer geringen Graphitierbarkeit weist Körnungen größer 0,5 mm auf. Die Körnung kann beispielsweise durch Sieben und geeignetem Fraktionieren von dem Koks erhalten werden. In einer bevorzugten Ausführungsform weist der Koks mit einer sphärischen Morphologie eine BET-Oberfläche von 20 bis 40 m²/g auf. Seine Porosität ist sehr niedrig.

Der zwiebelschalenartig aufgebaute Koks kann weiterhin mindestens einen Zusatzstoff in seiner Struktur aufweisen. Ein Beispiel hierfür ist der Einbau von Russpartikeln, wie sie bei der Acetylensynthese zwangsläufig entstehen. Zusätzlich oder alternativ zu dem Koks, der aus der Acetylen-Herstellung stammt, kann auch Koks aus dem Fluid / Flexi- coking Verfahren (Exxon Mobil) erfindungsgemäß als Koks mit einer geringen Graphitierbarkeit eingesetzt werden. Ein aus dem Fluid coking Verfahren erhältlicher Koks weist ebenfalls eine niedrige Graphitierbarkeit auf. Zudem weist er ebenfalls eine kugel- bis ellipsoidförmige Gestalt auf und ist zwiebelschalenartig aufgebaut. Im Vergleich zu dem vorstehend beschriebenen Koks, der als Nebenprodukt bei der Herstellung von Acetylen anfällt, weist er einen höheren Aschegehalt auf. Die vorstehend gemachten röntgenstrukturellen Angaben treffen auf ihn ebenfalls zu.

Zusätzlich oder alternativ kann auch ein so genannter shot-Koks (auf Deutsch als Schrotkoks übersetzbar) aus dem "delayed-coking-Verfahren" im Sinne der vorliegenden Erfindung als Koks mit einer sphärischen Morphologie eingesetzt werden. Die Grenzen der vorstehend gemachten röntgenstrukturellen Angaben sind in diesem Fall aufgrund der etwas besseren Graphitierbarkeit zu modifizieren. Nach einer Temperaturbehandlung bei 2800°C sollte der mittlere Schichtebenenabstand größer als 0,338 nm und die Kristallitgröße in c-Richtung kleiner als 30 nm betragen. Die Abriebfestigkeit des graphitierten Kohlenstoffkörpers erreicht nicht ganz die der mit den zuvor beschriebenen Koksvarianten. Aufgrund der sphärischen Morphologie dieses shot-Kokses wird jedoch ebenfalls die verbesserte Fließfähigkeit der Masse erhalten und man erreicht einen Kohlenstoffkörper hoher Rohdichte.

Bevorzugt stellt der Kohlenstoffkörper einen Kathodenblock dar. Je nach verwendetem Rohmaterial bzw. Herstellungsverfahren wird bei Kathodenblöcken zwischen einem amorphen Kathodenblock, einem graphitierten Kathodenblock und einem graphitischen Kathodenblock unterschieden. In einer bevorzugten Ausführungsform stellt der Kohlenstoffkörper einen graphitierten Kathodenblock dar. Der Kohlenstoffkörper eignet sich aufgrund seiner hohen Abriebfestigkeit, Härte und Leitfähigkeit als Kathodenblock.

In einer alternativen Ausführungsform stellt der Kohlenstoffkörper bevorzugt einen graphitierten Hochofenstein dar. Der erfindungsgemäße Kohlenstoffkörper genügt den thermischen und mechanischen Belastungen eines Hochofensteins, insbesondere eines Hochofensteins, der als Auskleidung eines Hochofens zur Herstellung von Eisen dient. In solche Steine dringt das im Hochofen geschmolzene Eisen kaum ein, sodass nur eine geringe Abnutzung der Steine eintritt.

Das erfindungsgemäße Verfahren zur Herstellung eines Kohlenstoffkörpers enthält die Schritte Mischen von Anthrazit, Graphit oder herkömmlichen Koks wie beispielsweise Petrol- oder Steinkohlenteerpechkoks oder deren Mischungen, mindestens einem erdöl- oder kohlebasierenden Bindemittel und optional mindestens einen Kunstharz-basierenden Binder und optional beliebige Mischungen der genannten Bindemittel sowie optional weiteren Additiven und mindestens einem Mittel zur Erzeugung einer hohen Rohdichte, wobei das Mittel zur Erzeugung einer hohen Rohdichte Koks mit einer sphärischen Morphologie darstellt, Formen der Mischung zu einer vorbestimmten Form, Brennen der geformten Mischung und optional Graphitieren der gebrannten Mischung.

Bei dem erfindungsgemäßen Verfahren wird mindestens ein Bindemittel aus der Gruppe der erdöl- oder kohlebasierenden Bindemittel wie beispielsweise Teer, Pech, Bitumen oder ein Phenol- oder Furanharz verwendet.

Additive können beispielsweise Kohlenstoff-Nanofasern oder Kohlenstoff-Fasern darstellen.

In dem erfindungsgemäßen Verfahren werden die Ausgangsstoffe, die zur Herstellung des Kohlenstoffkörpers eingesetzt werden, in der oder den jeweilig gewünschten Körnungen verwendet. Gegebenenfalls wird ein Ausgangsstoff vor seinem Einsatz gesiebt. Alle vorbestimmten Ausgangsstoffe werden gegebenenfalls unter Temperatureinwirkung gemischt und gegebenenfalls geknetet. Anschließend wird die erhaltene Mischung geformt und verdichtet. Das Formen und Verdichten kann beispielsweise durch Extrusion, Pressen oder Vibrationsformen, d.h. Rütteln unter Unterdruck, erfolgen. Dann wird der geformte Körper gebrannt. Anschließend kann der Kohlenstoffkörper optional einer Graphitierung unterzogen werden. Danach kann der Kohlenstoffkörper zu den gewünschten Maßen seiner Endform bearbeitet werden.

Die Brenntemperatur beträgt in der Ausführung ohne anschließenden Graphitierungsschritt bevorzugt 1100 bis 1500°C. Wenn der Kohlenstoffkörper einer Graphitierung unterzogen wird, liegt die Brenntemperatur bevorzugt im Bereich von 700 bis 1100°C und die Temperatur der Graphitierung im Bereich von 2000 bis 3000°C. Vor oder nach einer Graphitierung kann der Kohlenstoffkörper imprägniert und erneut gebrannt werden. Eine Graphitierung wird bevorzugt gemäß dem Acheson-Graphitierungsverfahren, bevorzugter nach dem Längsgraphitierungsverfahren (LWG-Verfahren oder Castner-Verfahren) durchgeführt.

Bevorzugt wird in dem erfindungsgemäßen Verfahren als Koks mit einer geringen Graphitierbarkeit ein Koks eingesetzt, der aus Quenchöl erhältlich ist, das beim Quenchen des Reaktionsgases in der Synthese von ungesättigten Kohlenwasserstoffen insbesondere Acetylen verwendet wird (sogenannter Acetylenkoks). Der Koks weist bevorzugt einen Kohlenstoffgehalt von mindestens 96 Gew.-% und einen Aschegehalt von höchsten 0,05 Gew.-%, bevorzugt höchstens 0,01 Gew.-%, auf. Eine Alternative zu einem Koks aus der Acetylensynthese ist sphäroidaler Koks aus dem Fluid-/Flexicoking Verfahren. Eine weitere Alternative zu einem Koks aus der Acetylensynthese ist shot-Koks aus dem delayed-coking-Verfahren. Bei den beiden erstgenannten Koksarten handelt sich um schlecht graphitierbaren, harten Koks, für den die vorstehend gemachten röntgenstrukturellen Angaben zutreffend sind.

Der Koks mit einer geringen Graphitierbarkeit, der bei der Herstellung von Acetylen als Nebenprodukt erhalten wird, kann in dem erfindungsgemäßen Verfahren eingesetzt werden, wie er in dem vorstehend beschriebenen Verfahren erhalten wird, das beispielsweise in der DE 29 47 005 A1 offenbart ist. Alternativ kann der Koks vor seinem Einsatz in dem erfindungsgemäßen Verfahren thermisch vorbehandelt werden. Die thermische Vorbehandlung umfasst eine Calcinierung, d.h. eine Wärmebehandlung des Kokses bei einer Temperatur in dem Bereich zwischen 700 bis 1600°C, bevorzugt 1000 bis 1500°C, bevorzugter 1100 bis 1300°C, ggf. unter einer reduzierenden Atmosphäre. Eine derartige Behandlung führt insbesondere zum Verdampfen von Wasser, flüchtigen brennbaren Stoffen wie beispielsweise Kohlenwasserstoffen wie Methan, Kohlenmonoxid bzw. Wasserstoff. In einer bevorzugten Ausführungsform wird der Koks mit einer sphärischen Morphologie mit einem Graphitierungsgrad nach Maire und Mehring nach einer Temperaturbehandlung des Kokses bei 2800°C, berechnet aus dem mittleren Schichtabstand c/2, von 0,5 oder weniger in dem erfindungsgemäßen Verfahren eingesetzt. Der Koks mit einer sphärischen Morphologie und einer niedrigen Graphitierbarkeit stellt ein Mittel zur Erzeugung einer hohen Rohdichte und einer hohen Abriebfestigkeit dar.

Die Menge des eingesetzten Kokses mit einer sphärischen Morphologie beträgt bevorzugt höchstens 25 Gew.-%, bevorzugter 10 bis 20 Gew.-%, bezogen auf die Trockenmischung. Erfindungsgemäß wird der Koks mit einer sphärischen Morphologie mit einer Körnung größer als 0,5 mm eingesetzt.

Der erfindungsgemäße Kohlenstoffkörper ist in einem breiten Bereich einsetzbar. Insbesondere aufgrund seiner hohen Rohdichte, hohen Abriebfestigkeit, hohen Verschleißfestigkeit, chemischen Inertheit und seiner hohen Temperaturbeständigkeit findet er beispielsweise in dem Bereich der Prozesstechnologie als Bauteil in Maschinen, chemischen Apparaturen oder Wärmetauscher Verwendung. Weiterhin wird der erfindungsgemäße Kohlenstoffkörper aufgrund seiner vorstehend beschriebenen Eigenschaften als Elektrode oder Auskleidung von Bauteilen bei der Herstellung von Stoffen verwendet, die unter relativ aggressiven Bedingungen wie beispielsweise der Aussatz zur aggressiven Chemikalien oder hohen Temperaturen hergestellt werden.

In einer bevorzugten Ausführungsform wird der erfindungsgemäße Kohlenstoffkörper als Kathodenblock in einer Elektrolysezelle zur Herstellung von Aluminium verwendet. Durch Ersetzen eines Teils des herkömmlichen Petrol- oder Steinkohlenteerpech-Kokses in herkömmlichen Kathodenblock-Rezepturen durch den speziellen, nahezu kugelförmigen, harten, schlecht graphitierbaren Koks wird ein Kathodenblock mit einer höheren Rohdichte gegenüber herkömmlichen Kathodenblöcken erhalten. Zudem ist die Abriebfestigkeit der Kathodenblock-Oberfläche gegenüber herkömmlichen Kathodenblock-Oberflächen erhöht. Durch die höhere Rohdichte und höhere Abriebfestigkeit ist eine derartige Kathode gut in der Lage, einer Erosion während einer Elektrolyse zur Herstellung von Aluminium aufgrund von chemischen und insbesondere mechanischen Belastungen standzuhalten.

Alternativ wird der Kohlenstoffkörper bevorzugt als Hochofenstein in einem Hochofen zur Herstellung von Eisen verwendet. Aufgrund der höheren Rohdichte und höheren Abriebfestigkeit im Vergleich zu herkömmlichen Hochofensteinen hält der erfindungsgemäße Kohlenstoffkörper als Hochofenstein den mechanischen Belastungen und dem thermischen Verschleiß stand. Der erfindungsgemäße Kohlenstoffkörper ist insbesondere zur Verwendung im Abstichbereich eines Hochofens zur Herstellung von Eisen geeignet.

In einer anderen bevorzugten Ausführungsform wird der erfindungsgemäße Kohlenstoffkörper als Elektrode in carbothermischen Reduktionsprozessen verwendet. Beispielsweise wird der erfindungsgemäße Kohlenstoffkörper bei der carbothermischen Herstellung von Silizium verwendet, bei der Siliziumdioxid zu Silicium reduziert wird.

Weiterhin findet der erfindungsgemäße Kohlenstoffkörper bevorzugt Verwendung als Elektrode in elektrothermischen Reduktionsprozessen oder als Auskleidung für einen Hochofen beispielsweise zur Herstellung von Aluminium, Titan, Silizium, Eisen, Eisenlegierungen, Phosphor, Glas oder Zement sowie als formgebendes Werkzeug bzw. als Auskleidung für Schmelz- und Warmhaltetiegel sowie Abgieß- und Auslaufrinnen in den genannten Bereichen.

Der erfindungsgemäße Kohlenstoffkörper kann weiterhin als Anode in der elektrolytischen Herstellung verschiedener Stoffe verwendet werden. Beispiele hierfür stellen eine Anode zur Herstellung von Fluor, welches insbesondere zur Herstellung von Uranhexafluorid benötigt wird, eine Anode zur Herstellung von Magnesium, Natrium, Lithium (Schmelzflusselektrolyse) oder eine Anode bei der Chlor-Alkali-Elektrolyse dar.

Beispiele für weitere Verwendungen des erfindungsgemäßen Kohlenstoffkörpers stellen ein Heizrohr bzw. -ring, Plattenheizelement, ein Entgasungsrohr bzw. Gasverteilersystem für das Nichteisen-Metallschmelzen, eine Dichtung, ein Diamantwerkzeug, eine Düse für Hochspannungsschalter, eine Graphitblindkugel für einen Kugelhaufenreaktor, ein Bauteil im Bereich vom Strangguss, Druckguss, Schleuderguss oder Eisenbahnräderguss wie beispielsweise eine Gießform, eine Löt- oder Glasschmelzform beispielsweise bei der Herstellung von Halbleitergehäusen - Glasdurchführungen und Lötverbindungen.

Der erfindungsgemäße Kohlenstoffkörper findet weiterhin Verwendung in dem Bereich der Prozesstechnologie. Der erfindungsgemäße Kohlenstoffkörper kann als Bauteil eines Wärmetauschers wie beispielsweise als Rohrbündelwärmetauscher, Rohrboden, Plattenwärmetauscher oder Dichtung verwendet werden. Weiterhin kann der erfindungsgemäße Kohlenstoffkörper als Kolonne z. B. bei der Synthese von Säuren wie beispielsweise HCl-Synthese, als Schutzrohr, Siebboden, Tunnelboden, Glockenboden, Flüssigkeitsverteiler, Porenreaktor, Pumpe oder Berstscheibe verwendet werden.

## Patentansprüche

1. Kohlenstoffkörper, der durch Brennen einer Mischung, die zumindest Koks enthält, hergestellt ist, **dadurch gekennzeichnet, dass** der Koks einen Graphitierungsgrad nach Maire und Mehring nach einer Temperaturbehandlung des Kokses bei 2800 °C, berechnet aus dem mittleren Schichtabstand c/2, von 0,5 oder weniger aufweist, und dass die Körnung des Kokses, welcher eine sphärische Morphologie besitzt, größer als 0,5 mm ist.

2. Kohlenstoffkörper nach Anspruch 1, **dadurch gekennzeichnet, dass** der Koks in einer Menge von höchstens 25 Gew.-%, bevorzugt 10 bis 20 Gew.-%, enthalten ist, bezogen auf die Trockenmischung.

3. Kohlenstoffkörper nach Anspruch 1 oder 2, **dadurch gekennzeichnet, dass** der Koks eine Zwiebelschalenstruktur aufweist.

4. Kohlenstoffkörper nach einem oder mehreren der Ansprüche 1 bis 3, **dadurch gekennzeichnet, dass** der Koks eine BET-Oberfläche von 20 bis 40 m²/g aufweist.

5. Kohlenstoffkörper nach einem oder mehreren der Ansprüche 1 bis 4, **dadurch gekennzeichnet, dass** er einen Kathodenblock oder einen Hochofenstein darstellt.

6. Kohlenstoffkörper nach Anspruch 5, **dadurch gekennzeichnet, dass** der Kathodenblock einen graphitierten Kathodenblock darstellt.

7. Verfahren zur Herstellung eines Kohlenstoffkörpers enthaltend die Schritte Mischen von Anthrazit, Graphit und Koks oder deren Mischungen, mindestens einem Bindemittel aus der Gruppe der erdöl- oder kohlebasierenden Bindemittel, sowie Kunstharz-basierenden Binder und beliebigen Mischungen
der genannten Bindemittel, und optional Additiven, Formen der Mischung zu einer vorbestimmten Form, Brennen der geformten Mischung und optional Graphitieren des gebrannten Formkörpers, **dadurch gekennzeichnet, dass** der Koks einen Graphitierungsgrad nach Maire und Mehring nach einer Temperaturbehandlung des Kokses bei 2800°C, berechnet aus dem mittleren Schichtabstand c/2, von 0,50 oder weniger aufweist, und dass die Körnung des Kokses, welcher eine sphärische Morphologie besitzt, größer als 0,5 mm ist.

8. Verfahren nach Anspruch 7, **dadurch gekennzeichnet, dass** der Koks mit einer sphärischen Morphologie in einer Menge von höchstens 25 Gew.-%, bevorzugt 10 bis 20 Gew.-%, zugegeben wird, bezogen auf die Trockenmischung.

9. Verfahren nach 8, **dadurch gekennzeichnet, dass** der Koks mit einer sphärischen Morphologie eine Zwiebelschalenstruktur aufweist.

10. Verfahren nach einem oder mehreren der Ansprüche 7 bis 9, **dadurch gekennzeichnet, dass** der Koks mit einer sphärischen Morphologie eine BET-Oberfläche von 20 bis 40 m²/g aufweist.

11. Verwendung eines Kohlenstoffkörpers nach einem oder mehreren der Ansprüche 1 bis 6, insbesondere hergestellt nach einem Verfahren gemäß einem oder mehreren der Ansprüche 7 bis 10, als Bauteil in einer Maschine, chemischen Apparatur, Wärmetauscher, als Auskleidung für ein Hochtemperaturbauteil, oder als Elektrode, als Kathodenblock in einer Elektrolysezelle zur Herstellung von Aluminium, als Hochofenstein in einem Hochofen zur Herstellung von Eisen, als Elektrode bei der carbothermischen Herstellung von Silizium, als Auskleidung für einen Hochofen, formgebendes Werkzeug, Auskleidung für Schmelz- und Warmhaltetiegel oder Abgieß- und Auslaufrinne für die Herstellung von Aluminium, Titan, Silizium, Eisen, Eisenlegierungen, Phosphor, Glas oder Zement, als Anode zur Herstellung von Fluor, als Anode zur Herstellung von Magnesium, Natrium oder Lithium, als Anode bei der Chlor-Alkali-Elektrolyse, als Heizrohr bzw. -ring, als Plattenheizelement, als Entgasungsrohr oder Gasverteilersystem für das Nichteisen-Metallschmelzen, als Dichtung, als Diamantwerkzeug, als Düse für Hochspannungsschalter, als Graphitblindkugel für einen Kugelhaufenreaktor, als Gießform im Bereich vom Strangguss, Druckguss, Schleuderguss oder Eisenbahnräderguss, als Löt- oder Glasschmelzform bei der Herstellung von Halbleitergehäusen-Glasdurchführungen und Lötverbindungen, als Rohrbündelwärmetauscher, als Rohrboden, als Plattenwärmetauscher, als Kolonne, als Schutzrohr, Siebboden, Tunnelboden, Glockenboden, Flüssigkeitsverteiler, Porenreaktor, Pumpe oder Berstscheibe.

## Claims

1. Carbon body, which is produced by calcining a mixture that contains at least coke, **characterised in that** the coke has a degree of graphitisation in accordance with Maire and Mehring after heat treatment of the coke at 2800°C, calculated from the average layer spacing c/2, of 0.5 or less, and **in that** the grain size of the coke, which has a spherical morphology, is greater than 0.5 mm.

2. Carbon body according to claim 1, **characterised in that** the coke is contained in an amount of at most 25 wt.%, preferably 10 to 20 wt.%, based on the dry mixture.

3. Carbon body according to either claim 1 or claim 2, **characterised in that** the coke has an onion-skin structure.

4. Carbon body according to one or more of claims 1 to 3, **characterised in that** the coke has a BET surface area of 20 to 40 m²/g.

5. Carbon body according to one or more of claims 1 to 4, **characterised in that** it is a cathode block or a blast furnace brick.

6. Carbon body according to claim 5, **characterised in that** the cathode block is a graphitised cathode block.

7. Method for producing a carbon body, containing the steps of: mixing anthracite, graphite and coke or mixtures thereof, at least one binder from the group of petroleum-based or carbon-based binders, and synthetic-resin-based binders and any mixtures of the mentioned binders, and optionally additives; shaping the mixture into a predetermined shape; calcining the shaped mixture; and optionally graphitising the calcined shaped body, **characterised in that** the coke has a degree of graphitisation in accordance with Maire and Mehring after heat treatment of the coke at 2800°C, calculated from the average layer spacing c/2, of 0.50 or less, and **in that** the grain size of the coke, which has a spherical morphology, is greater than 0.5 mm.

8. Method according to claim 7, **characterised in that** the coke having a spherical morphology is added in an amount of at most 25 wt.%, preferably 10 to 20 wt.%, based on the dry mixture.

9. Method according to claim 8, **characterised in that** the coke having a spherical morphology has an onion-skin structure.

10. Method according to one or more of claims 7 to 9, **characterised in that** the coke having a spherical morphology has a BET surface area of 20 to 40 m²/g.

11. Use of a carbon body according to one or more of claims 1 to 6, in particular produced by a method according to one or more of claims 7 to 10, as a component in a machine, chemical apparatus or heat exchanger, as a lining for a high-temperature component, or as an electrode, as a cathode block in an electrolytic cell for producing aluminium, as a blast furnace brick in a blast furnace for producing iron, as an electrode in the carbothermic production of silicon, as a lining for a blast furnace, a shaping die, a lining for crucibles and holding crucibles or casting and outflow channels for producing aluminium, titanium, silicon, iron, iron alloys, phosphorus, glass or cement, as an anode for producing fluorine, as an anode for producing magnesium, sodium or lithium, as an anode in chlor-alkali electrolysis, as a heating tube or ring, as a panel heating element, as a degassing pipe or gas sparger system for non-iron molten baths, as a seal, as a diamond tool, as a nozzle for a high voltage switch, as a blank graphite sphere for a pebble bed reactor, as a casting mould in the field of strand casting, pressure die casting, centrifugal casting or railway wheel casting, as a molten metal bath or molten glass mould in the production of semiconductor packages, glass feed throughs and soldered joints, as tube bundle heat exchangers, as tube bottoms, as panel heat exchangers, as a rectifying column, as a protection tube, sieve trays, channel trays, bubble cap trays, liquid distributors, pore reactors, pumps or bursting discs.

## Revendications

1. Corps en carbone, qui est produit en calcinant un mélange qui contient au moins du coke, **caractérisé en ce que** le coke a un degré de graphitisation calculé selon Maire et Mehring après un traitement thermique du coke à 2800°C, calculé à partir de la distance interlamellaire moyenne c/2, de 0,5 ou inférieure, et **en ce que** la taille des grains du coke, qui a une morphologie sphérique, est supérieure à 0,5 mm.

2. Corps en carbone selon la revendication 1, **caractérisé en ce que** le coke est contenu dans une quantité de 25 % en poids maximum, de préférence de 10 à 20 % en poids, sur la base du mélange sec.

3. Corps en carbone selon la revendication 1 ou la revendication 2, **caractérisé en ce que** le coke a une structure multicouche.

4. Corps en carbone selon une ou plusieurs des revendications 1 à 3, **caractérisé en ce que** le coke a une surface BET de 20 à 40 m²/g.

5. Corps en carbone selon une ou plusieurs des revendications 1 à 4, **caractérisé en ce qu'**il s'agit d'un bloc cathodique ou d'une brique de garnissage.

6. Corps en carbone selon la revendication 5, **caractérisé en ce que** le bloc cathodique est un bloc cathodique graphitisé.

7. Procédé de production d'un corps en carbone, contenant les étapes suivantes :
mélanger de l'anthracite, du graphite et du coke ou des mélanges de ceux-ci, au moins un liant choisi dans le groupe de liants à base de pétrole ou à base de carbone et de liants à base de résine synthétique et tout mélange des liants mentionnés, et facultativement des additifs ;
façonner le mélange en une forme prédéterminée ; calciner le mélange formé ; et
éventuellement graphitiser le corps formé calciné, **caractérisé en ce que** le coke a un degré de graphitisation calculé selon Maire et Mehring après un traitement thermique du coke à 2800°C, calculé à partir de la distance interlamellaire moyenne c/2, de 0,5 ou inférieure, et **en ce que** la taille des grains du coke, qui a une morphologie sphérique, est supérieure à 0,5 mm.

8. Procédé selon la revendication 7, **caractérisé en ce que** le coke ayant une morphologie sphérique est ajouté dans une quantité de 25 % en poids maximum, de préférence de 10 à 20 % en poids, sur la base du mélange sec.

9. Procédé selon la revendication 8, **caractérisé en ce que** le coke ayant une morphologie sphérique a une structure multicouche.

10. Procédé selon une ou plusieurs des revendications 7 à 9, **caractérisé en ce que** le coke ayant une morphologie sphérique a une surface BET de 20 à 40 m²/g.

11. Utilisation d'un corps en carbone selon une ou plusieurs des revendications 1 à 6, produit en particulier par un procédé selon une ou plusieurs des revendications 7 à 10, en tant que composant dans une machine, un appareil chimique ou un échangeur de chaleur, en tant que garnissage pour un composant à haute température, ou en tant qu'électrode, en tant que bloc cathodique dans une cellule électrolytique pour produire de l'aluminium, en tant que brique de garnissage dans un haut fourneau pour produire du fer, en tant qu'électrode dans la production carbothermique de silicium, en tant que garnissage pour un haut fourneau, un guide forme, un garnissage pour des creusets et des creusets de maintien ou des canaux de coulée ou d'écoulement de sortie pour produire de l'aluminium, du titane, du silicium, du fer, des alliages de fer, du phosphore, du verre ou du ciment, en tant qu'anode pour produire du fluor, en tant qu'anode pour produire du magnésium, du sodium ou du lithium, en tant qu'anode dans une électrolyse des chlorures alcalins, en tant que tube chauffant ou couronne chauffante, en tant qu'élément chauffant plan, en tant que tuyau de dégazage ou système distributeur de gaz pour des bains de non fer en fusion, en tant que joint, en tant qu'outil diamant, en tant que buse pour un commutateur haute tension, en tant que sphère de graphite brut pour un réacteur à lit de boulets, en tant que moule de fonte dans le domaine de la coulée en continu, de la coulée sous pression, de la coulée par centrifugation ou de la coulée de type roue de chemin de fer, en tant que bain de métal en fusion ou moule de verre en fusion dans la production de boîtiers semi-conducteurs, de canal d'amenée de verre et de joints brasés, en tant qu'échangeur de chaleur à faisceau tubulaire, en tant que fonds à tubes, en tant qu'échangeurs de chaleur à plaques, en tant que colonne de rectification, en tant que tube de protection, plateaux perforés, plateaux de rangement à rainures, plateaux à coupelles, distributeurs de liquide, réacteurs à orifices, pompes ou disques de rupture.
